# EUROPEAN PATENT APPLICATION

(11) **EP 4 417 842 A1**
(43) Date of publication of application: **21.08.2024**
(21) Application number: 23208125.7
(22) Date of filing: 07.11.2023
(51) Int. Cl.: F16J 15/16, F16J 15/54, F16K 5/04, F16K 11/085

(54) **SEALING DEVICE AND SEALING STRUCTURE**

(30) Priority: 20.02.2023 JP 2023024121
(71) Applicant: NOK Corporation, Tokyo 105-8585 (JP); Aisin Corporation, Aichi 448-8650 (JP)
(72) Inventor: TOMATSU, Takumi, Makinohara-shi, Shizuoka, 4210532 (JP); YANAGI, Tokunori, Makinohara-shi, Shizuoka, 4210532 (JP); ABE, Shinji, Makinohara-shi, Shizuoka, 4210532 (JP); YAMAGUCHI, Tomohiro, Kariya, Aichi, 448-8650 (JP); KIHARA, Masao, Kariya, Aichi, 448-8650 (JP); OIWA, Toshiyuki, Kariya, Aichi, 448-8650 (JP)
(74) Representative: Global IP Europe Patentanwaltskanzlei

(57) **Abstract**

A sealing device is provided between an outer circumferential surface of a rotatable rotor and an inner circumferential surface of a housing for accommodating the rotor. The sealing device includes: a body having a first surface facing the outer circumferential surface of the rotor, a second surface facing the inner circumferential surface of the housing, and a third opening corresponding to the second opening; a sealing bead on the first surface, the sealing bead surrounding the third opening; and at least one auxiliary bead on the first surface, the at least one auxiliary bead protruding from the sealing bead in a circumferential direction of the rotor.

## Description

### CROSS REFERENCE TO RELATED APPLICATION

This application is based on and claims priority from Japanese Patent Application No. 2023-24121, filed on February 20, 2023, the entire contents of which are incorporated herein by reference.

### BACKGROUND

### Field of the Invention

This disclosure relates to a sealing device and a sealing structure.

### Description of Related Art

In a valve device configured to switch flow paths for a fluid, a looped seal is used to prevent leakage of the fluid. For example, Japanese Patent No. 4649211 discloses a control valve that includes a cylindrical rotor, a housing for accommodating the rotor, and a sealing ring provided between an outer circumferential surface of the rotor and an inner circumferential surface of the housing. The valve device disclosed in Japanese Patent No. 4649211 includes a material that has a low coefficient of friction to reduce a torque required for rotation of the rotor. However, the disclosure of Japanese Patent No. 4649211 is open to improvement for reducing a torque required for rotation of a rotor.

### SUMMARY OF THE INVENTION

An object of one aspect according to this disclosure is to reduce a torque peak required for rotation of a rotor.

A sealing device according to one aspect of this disclosure is a sealing device provided between an outer circumferential surface of a rotatable rotor and an inner circumferential surface of a housing for accommodating the rotor, the sealing device including a reduction unit on a first surface facing the outer circumferential surface of the rotor, the reduction unit being configured to reduce a torque peak for rotation of the rotor.

A sealing device according to another aspect of this disclosure is a sealing device provided between an outer circumferential surface of a rotatable rotor and an inner circumferential surface of a housing for accommodating the rotor, the outer circumferential surface of the rotor having a first opening, the inner circumferential surface of the housing having a second opening communicable with the first opening, and the sealing device includes: a body including a first surface facing the outer circumferential surface of the rotor, a second surface facing the inner circumferential surface of the housing, and a third opening corresponding to the second opening; a sealing bead on the first surface, the sealing bead surrounding the third opening; and at least one auxiliary bead on the first surface, the at least one auxiliary bead protruding from the sealing bead in a circumferential direction of the rotor.

A sealing structure according to one aspect of this disclosure includes: a rotatable rotor; a housing for accommodating the rotor; and a sealing device provided between an outer circumferential surface of the rotor and an inner circumferential surface of the housing, the sealing device including a reduction unit on a first surface facing the outer circumferential surface of the rotor, the reduction unit being configured to reduce a torque peak for rotation of the rotor.

A sealing structure according to another aspect of this disclosure includes: a rotatable rotor having an outer circumferential surface with a first opening; a housing for accommodating the rotor, the housing having an inner circumferential surface with a second opening communicable with the first opening; and a sealing device provided between an outer circumferential surface of the rotor and an inner circumferential surface of the housing, the sealing device including: a body including a first surface facing the outer circumferential surface of the rotor, a second surface facing the inner circumferential surface of the housing, and a third opening corresponding to the second opening; a sealing bead on the first surface, the sealing bead surrounding the third opening; and at least one auxiliary bead on the first surface, the at least one auxiliary bead protruding from the sealing bead in a circumferential direction of the rotor.

### BRIEF DESCRIPTION OF THE DRAWINGS

Fig. 1 is an exploded side view of a valve device according to a first embodiment.
Fig. 2 is a diagram showing the valve device.
Fig. 3 is a plan view of an inner circumferential surface of a sealing device.
Fig. 4 is a plan view of an outer circumferential surface of the sealing device.
Fig. 5 is an enlarged view of a region α1 in Fig. 3.
Fig. 6 is a cross section taken along line VI-VI in Fig. 5.
Fig. 7 is a cross section taken along line VII-VII in Fig. 5.
Fig. 8 is a diagram showing a relationship between a position of a rotor and a torque.
Fig. 9 is a diagram showing analysis targets in Fig. 8.
Fig. 10 is a plan view of the inner circumferential surface of the sealing device according to a second embodiment.
Fig. 11 is an enlarged view of a region α2 in Fig. 10.
Fig. 12 is a cross section taken along line XII-XII in Fig. 11.
Fig. 13 is a cross section taken along line XIII-XIII in Fig. 11.
Fig. 14 is a diagram showing a supplement relating to the first embodiment.
Fig. 15 is a cross section of the sealing device according to a modification.
Fig. 16 is a plan view of the inner circumferential surface of the sealing device according to another modification.
Fig. 17 is a plan view of a sealing bead and auxiliary beads according to yet another modification.
Fig. 18 is a plan view of a sealing bead and auxiliary beads according to yet another modification.
Fig. 19 is a plan view of a sealing bead and auxiliary beads according to yet another modification.
Fig. 20 is a plan view of a sealing bead and auxiliary beads according to yet another modification.
Fig. 21 is a plan view of a sealing bead and auxiliary beads according to yet another modification.
Fig. 22 is a plan view of a sealing bead and auxiliary beads according to yet another modification.
Fig. 23 is a plan view of a sealing bead and auxiliary beads according to yet another modification.
Fig. 24 is a plan view of a sealing bead and auxiliary beads according to yet another modification.
Fig. 25 is a plan view of a sealing bead and auxiliary beads according to yet another modification.
Fig. 26 is a cross section of the sealing device according to yet another modification.
Fig. 27 is a cross section of the sealing device according to yet another modification.
Fig. 28 is a cross section of the sealing device according to yet another modification.
Fig. 29 is a cross section of the sealing device according to yet another modification.
Fig. 30 is a plan view of the sealing device according to yet another modification.
Fig. 31 is a cross section of the sealing device according to yet another modification.
Fig. 32 is a cross section of the sealing device according to yet another modification.

### DESCRIPTION OF EMBODIMENTS

### A: First Embodiment

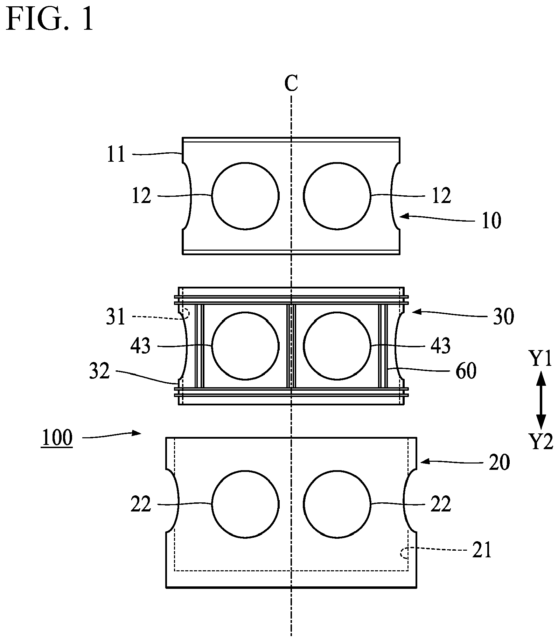

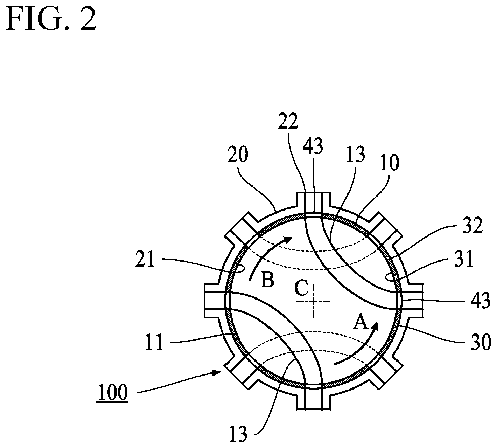

Fig. 1 is an exploded side view of a valve device 100 that includes a sealing structure according to a first embodiment. Fig. 2 is a schematic plan view of a structure of the valve device 100. The valve device 100 is a control valve configured to control flow paths for a fluid. The valve device 100 may be installed in an automobile as a multi-control valve for switching flow paths for a coolant, for example.

As shown in Fig.1 and Fig. 2, the valve device 100 includes a rotor 10, a housing 20, and a sealing device 30. The rotor 10 is a rotatable cylindrical structure. The housing 20 is a hollow structure with an internal space that accommodates the rotor 10, and is circular as viewed in cross section. The sealing device 30 is disposed in a gap between an outer circumferential surface 11 of the rotor 10 and an inner circumferential surface 21 of the housing 20, and the gap may have a looped shape. The sealing device 30 is a structure for sealing the gap between the rotor 10 and the housing 20, and the sealing device 30 may have a looped shape. The shape of the rotor 10 is not limited to a cylindrical shape. For example, the rotor 10 may be frustoconical or spherical in shape.

In the following description, a central axis C of the sealing device 30 is assumed. The central axis C may be referred to as an axis of rotation of the rotor 10. A direction along the central axis C is referred to as a direction Y1, and a direction opposite to the direction Y1 is referred to as a direction Y2. The direction Y1 and the direction Y2 may be collectively referred to as a "direction Y" A direction along a circumference of a virtual circle centered on the central axis C is referred to as a "circumferential direction," and a direction of a radius of the virtual circle is referred to as a "radial direction." A direction toward the central axis C in the radial direction may be referred to as an "inner direction," and a direction away from the central axis C in the radial direction may be referred to as an "outer direction."

As shown in Fig. 2, in the first embodiment, the rotor 10 can rotate around the central axis C in each of a direction A and a direction B. The directions A and B are opposite directions. The outer circumferential surface 11 of the rotor 10 includes a plurality of openings 12 arranged at intervals in the circumferential direction. The rotor 10 includes a plurality of flow paths 13, each of which interconnects two openings 12.

The housing 20 includes a plurality of openings 22. The plurality of openings 22 are arranged at intervals in the circumferential direction. When an opening 12 faces an opening 22, a fluid flows through a path between the opening 12 and the opening 22. A combination of an opening 12 and an opening 22 that face each other varies depending on an angle of rotation of the rotor 10. Thus, a combination of a flow path 13, an opening 12, and an opening 22 varies depending on an angle of rotation of the rotor 10. As a result, in the first embodiment, the rotor 10 functions as a valve body that switches flow paths of a fluid. Each of the openings 12 is an example of a "first opening," and each of the openings 22 is an example of a "second opening."

The sealing device 30 is an elastic body configured to seal one or more gaps in each path between an opening 12 and an opening 22. The sealing device 30 may be formed to be integral from one or more resin materials. For example, the sealing device 30 may be formed from a rubber material, such as chloroprene rubber (CR), silicone rubber (SR), acrylic rubber (ACM), urethane rubber (U), polyurethane rubber (PUR), vinyl methyl silicone rubber (VMQ), ethylene propylene diene rubber (EPDM), or fluorine rubber (FKM).

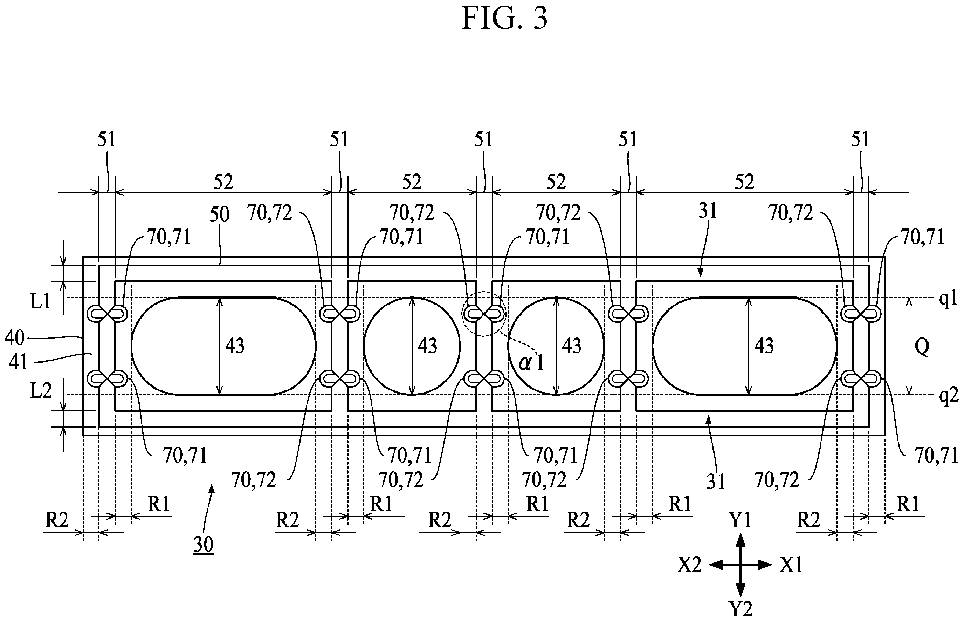

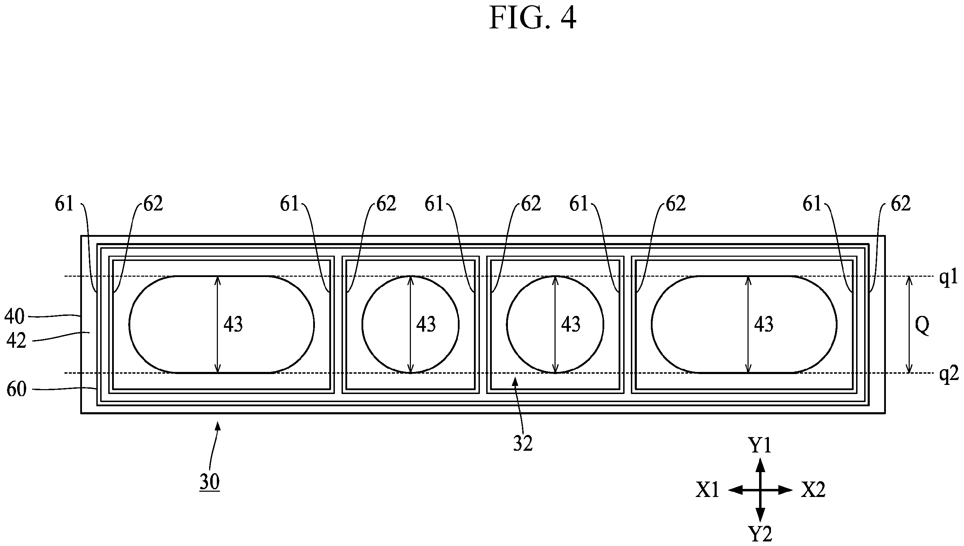

Fig. 3 and Fig. 4 are plan views of the sealing device 30. In Fig. 3 and Fig. 4, the sealing device 30 is developed on a plane. Fig. 3 is a plan view of an inner circumferential surface 31 of the sealing device 30. The inner circumferential surface 31 of the sealing device 30 faces the outer circumferential surface 11 of the rotor 10. Fig. 4 is a plan view of an outer circumferential surface 32 of the sealing device 30. The outer circumferential surface 32 of the sealing device 30 faces the inner circumferential surface 21 of the housing 20. In Fig. 3, a direction X1 and a direction X2 are perpendicular to the direction Y. The directions X1 and X2 are mutually opposite. The directions X1 and X2 may be collectively referred to as a "direction X."

In Fig. 3 and Fig. 4, the sealing device 30 has a rectangular shape that is elongate in the direction X. The sealing device 30 has two ends in the direction X. The sealing device 30 is disposed in the gap between the rotor 10 and the housing 20 in a state in which the sealing device 30 is wound in a looped shape or in an arc shape such that the two ends of the sealing device 30 are close to each other as shown in Fig. 1. Thus, the direction X corresponds to the circumferential direction around the central axis C.

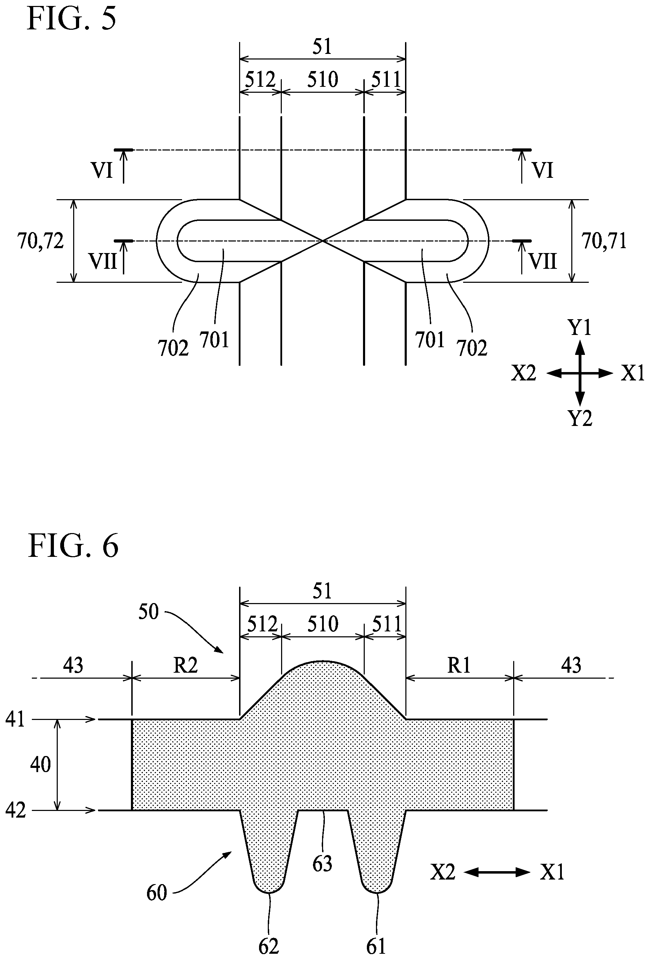

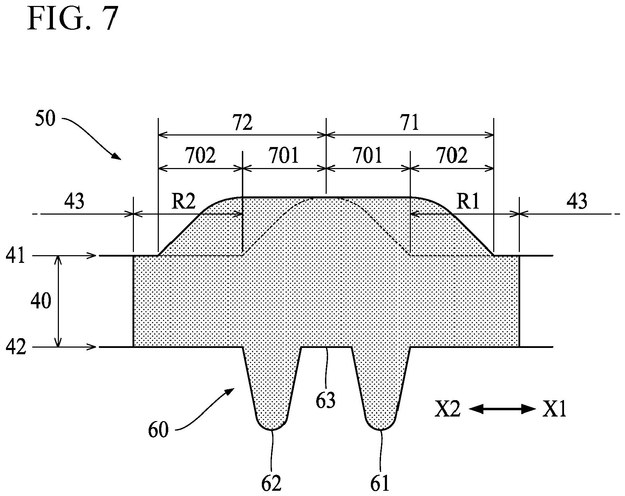

Fig. 5 is an enlarged view of a region α1 in Fig. 3. Fig. 6 is a cross section taken along line VI-VI in Fig. 5. Fig. 7 is a cross section taken along line VII-VII in Fig. 5. As shown in Fig. 3 through Fig. 7, in the first embodiment, the sealing device 30 is a structure that includes a body 40, a sealing bead 50, a rear bead 60, and a plurality of auxiliary beads 70. The body 40, the sealing bead 50, the rear bead 60, and the plurality of auxiliary beads 70 are formed as a unit.

The body 40 is a flat plate-shaped body that is elongate in the direction X. The body 40 is rectangular in shape and includes a first surface 41 and a second surface 42. The first surface 41 and the second surface 42 oppose each other. In a state in which the body 40 is in the valve device 100, the first surface 41 faces the outer circumferential surface 11 of the rotor 10, and the second surface 42 faces the inner circumferential surface 21 of the housing 20. In other words, in a state in which the sealing device 30 is wound in a looped shape, the first surface 41 corresponds to the inner circumferential surface 31 of the sealing device 30, and the second surface 42 corresponds to the outer circumferential surface 32 of the sealing device 30. In the following description, the first surface 41 and the second surface 42 are each planar. However, the first surface 41 and the second surface 42 may each be a curved surface such as a spherical surface or an arcuate surface, and may each be a rough surface having fine irregularities.

As shown in Fig. 3 and Fig. 4, the body 40 includes a plurality of openings 43. Each of the openings 43 is an example of a "third opening." Each of the openings 43 is a circular or elliptical through-hole extending from the first surface 41 to the second surface 42. The plurality of openings 43 are arranged at intervals in the direction X, and each corresponds to one of the plurality of openings 22 of the housing 20. Specifically, each of the openings 43 of the body 40 is superposed on a corresponding opening 22 of the housing 20 in the radial direction. The shape of each of the openings 43 may be freely selected, and is not limited to the examples shown in Fig.3 and Fig. 4. For example, the body 40 may include a rectangular opening 43.

As shown in Fig. 3, the sealing bead 50 is on the first surface 41 of the body 40. The sealing bead 50 extends linearly and protrudes from the first surface 41. Specifically, the sealing bead 50 includes a plurality of first portions 51 and a plurality of second portions 52. Each of the first portions 51 extends linearly in the direction Y, and each of the second portions 52 extends linearly in the direction X. The first portions 51 and the second portions 52 are interconnected such that the sealing bead 50 is lattice-shaped.

The second portions 52 are arranged in two rows in the direction X to include both a first sealing portion L1 and a second sealing portion L2. The first sealing portion L1 is a linear portion including a plurality of second portions 52 arranged in the direction X. The second sealing portion L2 is a linear portion including a plurality of second portions 52 arranged in the direction X. The first sealing portion L1 extends in the direction X along a first side of the first surface 41 of the body 40. The first surface 41 of the body 40 has a second side in addition to the first side. The first side and the second side extend in the direction X. The first side is spaced apart from the second side in the direction Y1. The second sealing portion L2 extends in the direction X along the second side of the first surface 41 of the body 40. Thus, the plurality of openings 43 are arranged between the first sealing portion L1 and the second sealing portion L2.

The plurality of first portions 51 extend from the first sealing portion L1 to the second sealing portion L2 in the direction Y. Thus, each of the first portions 51 is along the central axis C of the rotor 10. Each of the first portions 51 has a first end and a second end in the direction Y. The first end is spaced apart from the second end in the direction Y1. The first end of each of the first portions 51 is coupled to the first sealing portion L1. The second end of each of the first portions 51 is coupled to the second sealing portion L2. The plurality of first portions 51 are arranged at intervals in the direction X between the first sealing portion L1 and the second sealing portion L2. Each of the openings 43 is between two adjacent first portions 51 in the direction X. The first surface 41 of the body 40 includes a plurality of rectangular areas, and each of the rectangular areas includes one opening 43. Each of the rectangular areas is surrounded by two adjacent first portions 51 in the direction X and by two adjacent second portions 52 in the direction Y. In other words, the sealing bead 50 is lattice-shaped not only along each side of the body 40, but also along regions of the first surface 41 each of which is between two adjacent openings 43, and each of the openings 43 is surrounded by the sealing bead 50.

As shown in Fig. 5 and Fig. 6, a surface of each of the first portions 51 includes an arcuate surface 510, a slope 511, and a slope 512. The arcuate surface 510 is a curved surface formed in the shape of an arc of a circle with a predetermined radius. The slope 511 is a plane positioned in the direction X1 from the arcuate surface 510. The slope 511 is inclined at a predetermined angle (specifically an acute angle) to the first surface 41. Similarly, the slope 512 is a plane positioned in the direction X2 from the arcuate surface 510. The slope 512 is inclined at a predetermined angle (specifically an acute angle) to the first surface 41. The arcuate surface 510, the slope 511, and the slope 512 are coupled to each other to form a continuous surface of the first portion 51.

As shown in Fig. 3, the first surface 41 of the body 40 includes a plurality of regions R1 and a plurality of regions R2. The plurality of regions R1 have a one-to-one correspondence with the plurality of first portions 51. Each of the regions R1 is positioned in the direction X1 from a corresponding first portion 51. Each of the plurality of regions R2 corresponds to one of the plurality of first portions 51. Each of the regions R2 is positioned in the direction X2 from a corresponding first portion 51. Each of the first portions 51 has a third side and a fourth side that extend in the direction Y. The third side is spaced apart from the fourth side in the direction X1. Each of the regions R1 is a region between the third side of a corresponding first portion 51 and an opening 43 adjacent to the corresponding first portion 51 in the direction X1 from the corresponding first portion 51. Each of the regions R2 is a region between the fourth side of a corresponding first portion 51 and an opening 43 adjacent to the corresponding first portion 51 in the direction X2 from the corresponding first portion 51. Each of the regions R1 extends in the direction Y along a corresponding first portion 51, and each of the regions R2 extends in the direction Y along a corresponding first portion 51.

As shown in Fig. 4, the rear bead 60 is on the second surface 42 of the body 40. The rear bead 60 extends linearly and protrudes from the second surface 42. The rear bead 60 is lattice-shaped not only along each side of the body 40 but also along each of the regions between two adjacent openings 43. As shown in Fig. 6 and Fig.7, for each of the first portions 51, the rear bead 60 includes a protrusion 61 and a protrusion 62 that are spaced apart from each other. The arcuate surface 510 of the first portion 51 has a ridge line. In plan view, the ridge line of the arcuate surface 510 is between the protrusion 61 and the protrusion 62.

As shown in Fig. 3, each of the auxiliary beads 70 is on the first surface 41 of the body 40, and protrudes from the first surface 41. Each of the auxiliary beads 70 is a portion that protrudes from the sealing bead 50 in the direction X (i.e., in the circumferential direction of the rotor 10) on the first surface 41. Specifically, the auxiliary beads 70 protrude from the first portions 51 of the sealing bead 50 in the direction X. The auxiliary beads 70 are in a region Q with the openings 43. The length of the region Q in the direction Y is the same as that of each of the openings 43 in the direction Y. The region Q is between a portion q1 and a portion q2, each of which extends in the direction X. The portion q1 is spaced apart from the portion q2 in the direction Y1. The portion q1 and the portion q2 are each in contact with a peripheral edge of each of the openings 43. The size and shape of each of the openings 43 are substantially the same as those of each of the openings 12 of the rotor 10. Thus, the auxiliary beads 70 may be referred to as auxiliary beads in a region with the openings 22, the length of the region in the direction Y being the same as the length of each of the openings 22 in the direction Y.

Each of the auxiliary beads 70 may be outside the region Q. One of the auxiliary beads 70 may be in a region that includes both a part of the region Q and a part of a region outside the region Q. One or more of the auxiliary beads 70 may be in the region Q, and others may be in a region outside the region Q.

As shown in Fig. 5 and Fig. 7, a surface of each of the auxiliary beads 70 includes a top surface 701 and a slope 702. The top surface 701 is a curved surface extending from a top of the arcuate surface 510 of the first portion 51 in the direction X. The slope 702 is inclined at a predetermined angle (specifically an acute angle) to the first surface 41. The top surface 701 and the slope 702 are coupled to each other to form a continuous surface of the auxiliary bead 70.

In the first embodiment, the plurality of auxiliary beads 70 includes a plurality of first auxiliary beads 71 and a plurality of second auxiliary beads 72. As shown in Fig. 3, two first auxiliary beads 71 and two second auxiliary beads 72 are coupled to a first portion 51. Specifically, the two first auxiliary beads 71 corresponding to the first portion 51 are arranged at predetermined intervals in the direction Y Similarly, the two second auxiliary beads 72 corresponding to the first portion 51 are arranged at predetermined intervals in the direction Y In the first embodiment, positions of the first auxiliary beads 71 in the direction Y are the same as positions of the second auxiliary beads 72 in the direction Y. Thus, a distance between the two first auxiliary beads 71 corresponding to the first portion 51 is the same as that between the two second auxiliary beads 72 corresponding to the first portion 51.

As shown in Fig 3 and Fig. 5, each of the two first auxiliary beads 71 is an auxiliary bead 70 that protrudes from the first portion 51 in the direction X1. Specifically, each of the two first auxiliary beads 71 is in a region R1 extending from the first portion 51 in the direction X1. A predetermined spacing is provided between the tip of each of the two first auxiliary beads 71 and an opening 43 adjacent to the two first auxiliary beads 71.

As shown in Fig 3 and Fig. 5, each of the two second auxiliary beads 72 is an auxiliary bead 70 that protrudes from the first portion 51 in the direction X2. Specifically, each of the two second auxiliary beads 72 is in a region R2 extending from the first portion 51 in the direction X2. A predetermined spacing is provided between the tip of each of the two second auxiliary beads 72 and an opening 43 adjacent to the two second auxiliary beads 72. The size and shape of each of the first auxiliary beads 71 are the same as those of each of the second auxiliary beads 72.

In the above configuration, when the rotor 10 rotates in the direction A, the outer circumferential surface 11 of the rotor 10 moves in the direction X2 relative to the inner circumferential surface 31 (the first surface 41) of the sealing device 30 with the outer circumferential surface 11 of the rotor 10 in contact with the inner circumferential surface 31 (for example, a surface of the sealing bead 50 and a surface of each of the auxiliary beads 70) of the sealing device 30. In other words, an opening 12 of the rotor 10 moves in the direction X2 relative to a first portion 51. During the rotation described above, first the peripheral edge of the opening 12 comes into contact with two first auxiliary beads 71 on the first portion 51, and moves on the first auxiliary beads 71 before passing over the first portion 51. As a result, compared to a configuration in which no auxiliary beads 70 are provided, it is possible to reduce a torque peak required for rotation of the rotor 10 in the direction A.

When the rotor 10 rotates in the direction B, the outer circumferential surface 11 of the rotor 10 moves in the direction X1 relative to the inner circumferential surface 31 (the first surface 41) of the sealing device 30 with the outer circumferential surface 11 of the rotor 10 in contact with the inner circumferential surface 31 (for example, the surface of the sealing bead 50 and the surface of each of the auxiliary beads 70) of the sealing device 30. In other words, an opening 12 of the rotor 10 moves in the direction X1 relative to the first surface 41. During the rotation described above, first the peripheral edge of the opening 12 comes into contact with second auxiliary beads 72 on the first portion 51, and moves on the second auxiliary beads 72 before passing over the first portion 51. As a result, compared to the configuration in which no auxiliary beads 70 are provided, it is possible to reduce a torque peak required for rotation of the rotor 10 in the direction B.

In the first embodiment, each of the first auxiliary beads 71 protrudes from a first portion 51 in the direction X1, and each of the second auxiliary beads 72 protrudes from the first portion 51 in the direction X2. Thus, as described above, regardless of a direction (direction A or direction B) in which the rotor 10 rotates, it is possible to reduce a torque peak required for rotation of the rotor 10.

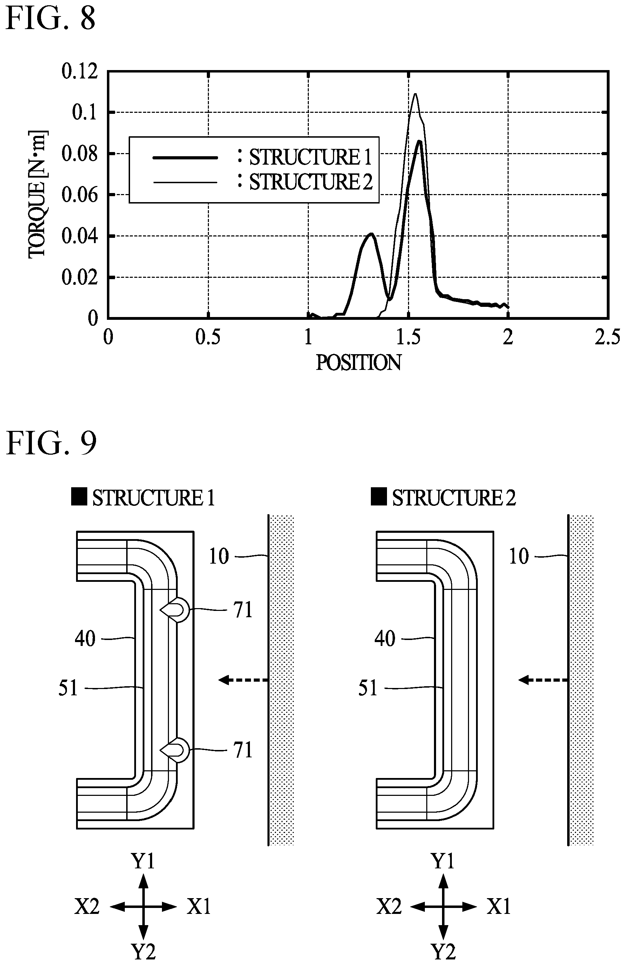

Fig. 8 is a graph showing a relationship between a position of the rotor 10 relative to the first surface 41 (horizontal axis) and torque required for rotation of the rotor 10 (vertical axis). In Fig. 8, as shown in Fig. 9, it is assumed that the outer circumferential surface 11 of the rotor 10 moves in the direction X2 relative to the first surface 41. Structure 1 and Structure 2 are analysis targets. In structure 1, two first auxiliary beads 71 protrude from a first portion 51 in the direction X1. In structure 2, no first auxiliary beads 71 are provided. A torque required for rotation of the rotor 10 was analyzed using nonlinear finite element analysis software "Marc."

As shown in Fig. 8, a torque required to rotate the rotor 10 fluctuates with movement of the outer circumferential surface 11 of the rotor 10 in the direction X2 relative to the first surface 41. In structure 2, in which no first auxiliary beads 71 are provided, the torque peak was 0.108 N · m. On the other hand, in structure 1, the torque increased up to about 0.04 N · m with the peripheral edge of the opening 12 of the rotor 10 in contact with the first auxiliary beads 71. The torque subsequently increased up to about 0.085 N · m with the rotor 10 passing over the first portion 51. As will be apparent from the above description, in structure 1 in which the auxiliary beads 70 are provided, torque peaks were distributed during rotation of the rotor 10. As a result, in structure 1, the torque peaks were reduced compared to structure 2.

Specifically, in structure 2 in which no auxiliary beads 70 are provided, the torque peak is greater than 0.1 N · m. In structure 1 in which the auxiliary beads 70 are provided, the torque peak is less than or equal to 0.1 N · m. More specifically, in structure 1, it is possible to reduce the torque peak to 0.09 N · m or less. As will be apparent from the above description, an auxiliary bead 70 functions as a reduction unit configured to reduce a torque peak for rotation of the rotor 10.

The peripheral edge of each opening 12 of the rotor 10 has a portion in contact with the portion q1 and a portion in contact with the portion q2. During rotation of the rotor 10, each of the portions of the peripheral edge of each opening 12 repeatedly come into contact with each of the first portions 51. Thus, in each of the first portions 51, stress is concentrated on regions that repeatedly come into contact with the portions of the peripheral edge of each opening 12. As a result, in structure 2 in which no auxiliary beads 70 are provided, contact marks (fine damage) of the portions of the peripheral edge of each opening 12 of the rotor 10 may occur on the first portion 51.
In the first embodiment, the auxiliary beads 70 are provided for the first portion 51. Accordingly, the first embodiment has an advantage in that a likelihood of occurrence of the contact marks on the first portion 51 is reduced.

### B: Second Embodiment

A second embodiment according to this disclosure will now be described. In the descriptions of the following embodiments, elements having the same functions as in the first embodiment are denoted by the same reference numerals used for like elements in the description of the first embodiment, and detailed description thereof is omitted, as appropriate.

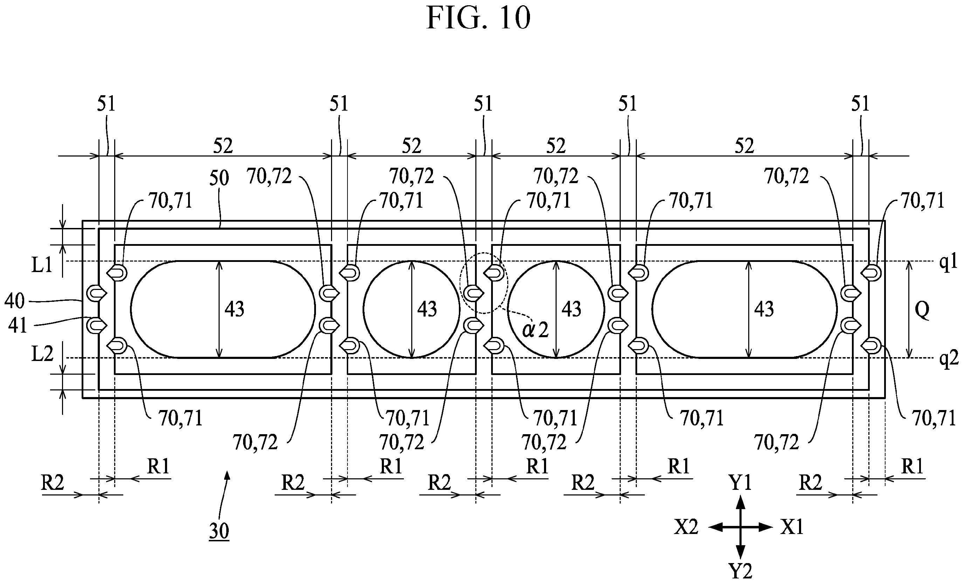

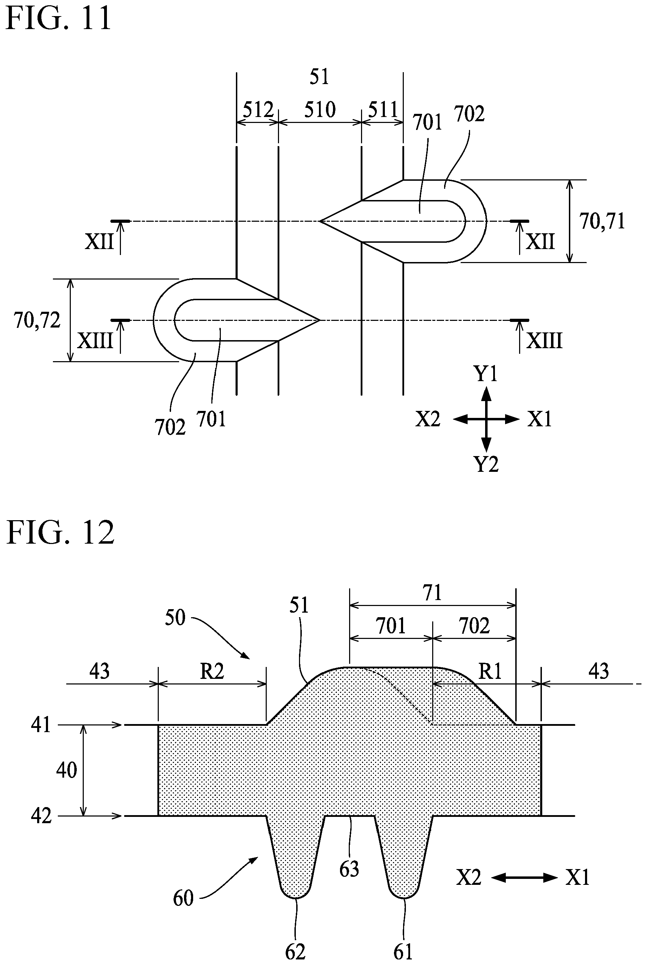

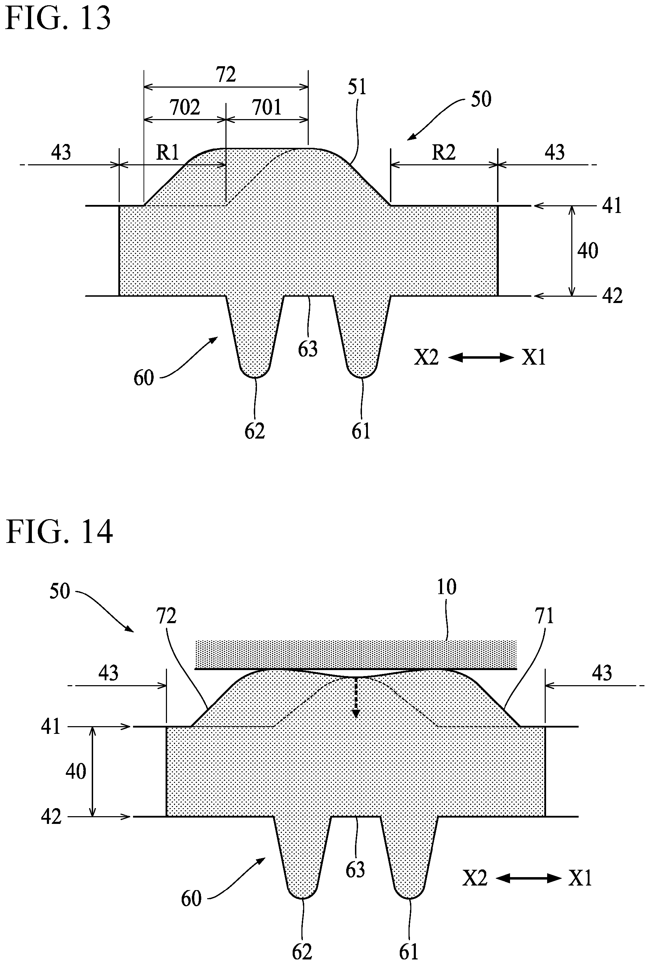

Fig. 10 is a plan view of the inner circumferential surface 31 (first surface 41) of the sealing device 30 according to the second embodiment. Fig. 11 is an enlarged view of a region α2 in Fig. 10. Fig. 12 is a cross section taken along line XII-XII in Fig. 11. Fig. 13 is a cross section taken along line XIII-XIII in Fig. 11.

In the first embodiment, the positions of the first auxiliary beads 71 in the direction Y are the same as the positions of the second auxiliary beads 72 in the direction Y. In the second embodiment, as shown in Fig. 10 and Fig. 11, the positions of the first auxiliary beads 71 in the direction Y are different from the positions of the second auxiliary beads 72 in the direction Y. Thus, no second auxiliary beads 72 are present in an area spaced apart from each of the first auxiliary beads 71 in the direction X2. In addition, no first auxiliary beads 71 are present in an area spaced apart from each of the second auxiliary beads 72 in the direction X1.

Specifically, as shown in Fig. 10, two second auxiliary beads 72 corresponding to a first portion 51 are present between two first auxiliary beads 71 corresponding to the first portion 51 in the direction Y. In other words, a distance between the two second auxiliary beads 72 is less than a distance between the two first auxiliary beads 71. As in the first embodiment, the auxiliary beads 70 are in the region Q, the length of the region Q in the direction Y being the same as the length of each of the openings 43 in the direction Y The second embodiment provides the same effects as those provided by the first embodiment.

Fig. 14 is a cross section of the first embodiment in which the positions of the first auxiliary beads 71 in the direction Y are the same as the positions of the second auxiliary beads 72 in the direction Y. In Fig. 14, the outer circumferential surface 11 of the rotor 10 is in contact with a first auxiliary bead 71 and a second auxiliary bead 72. In the first embodiment, in plan view the ridge line of the arcuate surface 510 of each of the first portions 51 is positioned in a region (region 63) between a protrusion 61 and a protrusion 62. Thus, since both the first auxiliary bead 71 and the second auxiliary bead 72 are pressed by the rotor 10, part of the first portion 51 (for example, the arcuate surface 510) between the first auxiliary bead 71 and the second auxiliary bead 72 may move downward as shown in Fig. 14. As a result, a sealing performance of the sealing device 30 may deteriorate.

In the second embodiment, the positions of the first auxiliary beads 71 in the direction Y are different from the positions of the second auxiliary beads 72 in the direction Y As a result, even in a state in which the outer circumferential surface 11 of the rotor 10 is in contact with the arcuate surface 510 of the first portion 51, it is possible to reduce a downward movement of the part of the first portion 51 (for example, the arcuate surface 510) between the first auxiliary bead 71 and the second auxiliary bead 72. Therefore, according to the second embodiment, it is possible to substantially prevent a deterioration in sealing performance of the sealing device 30.

### C: Modifications

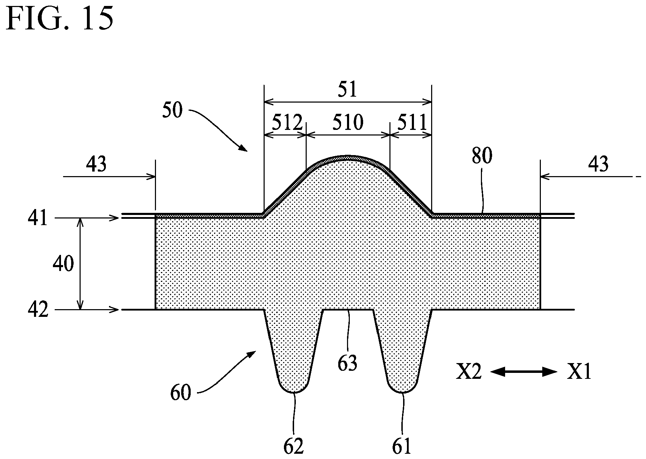

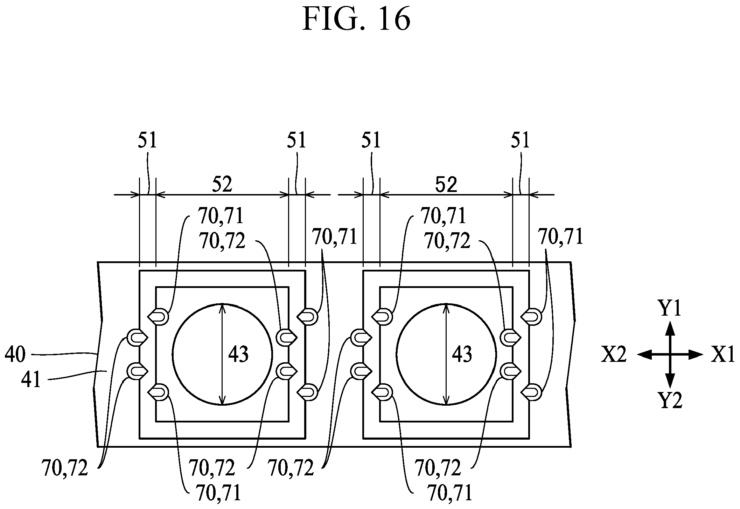

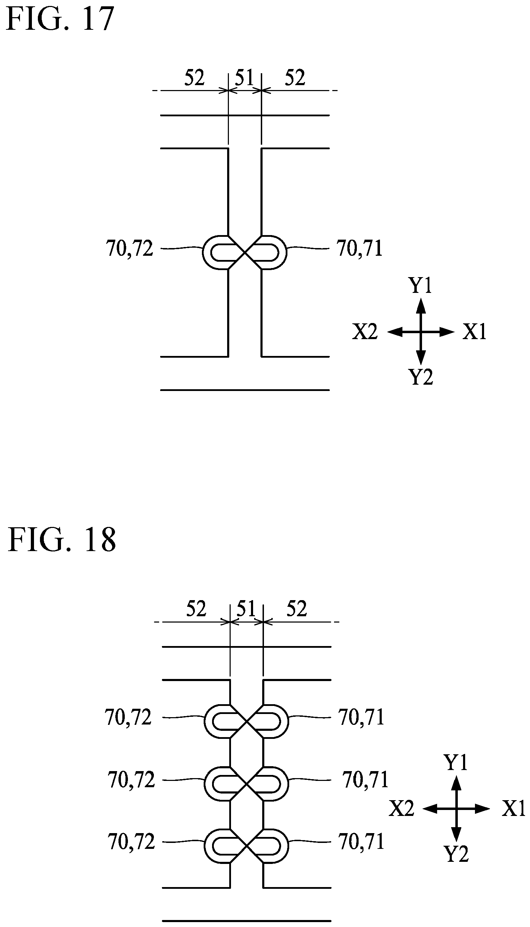

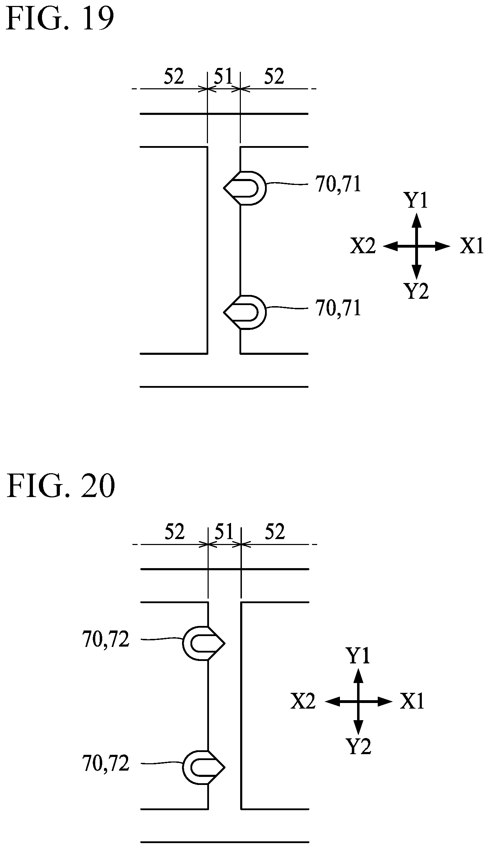

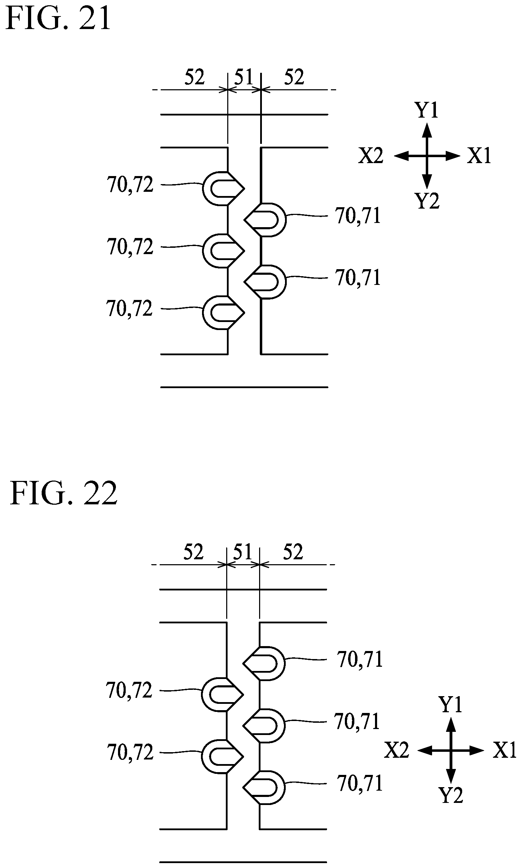

Specific modified modes that may be applied to each of the embodiments described above are described below. Two or more modifications freely selected from the following modifications may be combined as long as no conflict arises from such a combination.
(1) As shown in Fig. 15, a low friction layer 80 may be provided on the inner circumferential surface 31 of the sealing device 30. The low friction layer 80 provided on the inner circumferential surface 31 is a coating made from a resin material that has a low coefficient of friction, for example. In other words, the low friction layer 80 covers the first surface 41 (inner circumferential surface 31) of the body 40, the sealing bead 50, and the auxiliary beads 70. The low friction layer 80 may be made from a fluoropolymer material, or the like. According to a configuration in which the low friction layer 80 is provided, it is possible to further reduce a torque required for rotation of the rotor 10.
(2) In each of the foregoing embodiments, a first portion 51 is provided between two adjacent openings 43 in the direction X. In other words, the first portion 51 is used for the two openings 43. As shown in Fig. 16, a first portion 51 may be used for only one opening 43. In the configuration shown in Fig. 16, a rectangular seal portion, which is delineated by two adjacent first portions 51 in the direction X and two adjacent second portions 52 in the direction Y, is formed for each of the openings 43. As in the first or second embodiment, one or more auxiliary beads 70 are on each of the first portions 51.
(3) In each of the foregoing embodiments, two first auxiliary beads 71 and two second auxiliary beads 72 are coupled to a first portion 51. However, the number of first auxiliary beads 71 corresponding to a first portion 51 and the number of second auxiliary beads 72 corresponding to the first portion 51 may be changed as appropriate. For example, as shown in Fig. 17, a first auxiliary bead 71 and a second auxiliary bead 72 may be coupled to a first portion 51. As shown in Fig. 18, three first auxiliary beads 71 and three second auxiliary beads 72 may be coupled to a first portion 51. The number of auxiliary beads 70 coupled to a first portion 51 may be different from that of the auxiliary beads 70 coupled to another first portion 51. The number of first auxiliary beads 71 coupled to a first portion 51 may be different from that of the second auxiliary beads 72 coupled to the first portion 51.
(4) In each of the foregoing embodiments, at least one first auxiliary bead 71 and at least one second auxiliary bead 72 are coupled to a first portion 51. However, either the at least one first auxiliary bead 71 or the at least one second auxiliary bead 72 may be omitted. For example, in a configuration in which the rotor 10 rotates only in the direction A, only the first auxiliary beads 71 protruding from a first portion 51 in the direction X1 may be coupled to the first portion 51, as shown in Fig. 19. On the other hand, in a configuration in which the rotor 10 rotates only in the direction B, only the second auxiliary beads 72 protruding from a first portion 51 in the direction X2 may be coupled to the first portion 51, as shown in Fig. 20.
(5) In the second embodiment described above, two second auxiliary beads 72 are present between two first auxiliary beads 71 in the direction Y. A structure that causes the positions of the first auxiliary beads 71 in the direction Y to differ from the positions of the second auxiliary beads 72 in the direction Y may be freely selected, and the structure is not limited to the example described above. For example, as shown in Fig. 21 through Fig. 25, at least one first auxiliary bead 71 and at least one second auxiliary bead 72 may be arranged alternately in the direction Y.

In the configuration shown in Fig. 21, two first auxiliary beads 71 and three second auxiliary beads 72 are arranged alternately in the direction Y. Specifically, among the three second auxiliary beads 72 one of the two first auxiliary beads 71 is present between a middle second auxiliary bead 72 and a second auxiliary bead 72 spaced apart from the middle second auxiliary bead 72 in the direction Y1. The other of the two first auxiliary beads 71 is present between the middle second auxiliary bead 72 and a second auxiliary beads 72 spaced apart from the middle second auxiliary bead 72 in the direction Y2.

In the configuration shown in Fig. 22, three first auxiliary beads 71 and two second auxiliary beads 72 are arranged alternately in the direction Y. Specifically, among the three first auxiliary beads 71 one of the two second auxiliary beads 72 is present between a middle first auxiliary bead 71 and a first auxiliary bead 71 spaced apart from the middle first auxiliary bead 71 in the direction Y1. The other of the two second auxiliary beads 72 is present between the middle first auxiliary bead 71 and a first auxiliary bead 71 spaced apart from the middle first auxiliary bead 71 in the direction Y2.

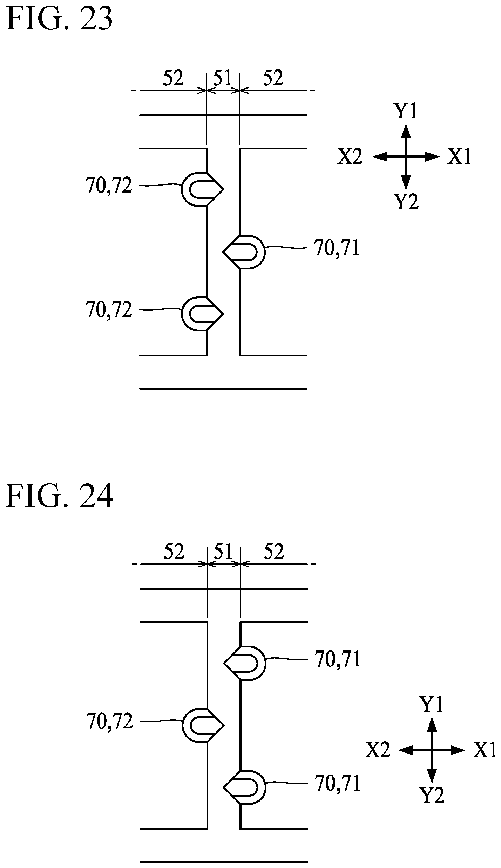

In the configuration shown in Fig. 23, one first auxiliary bead 71 and two second auxiliary beads 72 are arranged alternately in the direction Y. Specifically, the one first auxiliary bead 71 is present between the two adjacent second auxiliary beads 72 in the direction Y

In the configuration shown in Fig. 24, two first auxiliary beads 71 and one second auxiliary bead 72 are arranged alternately in the direction Y Specifically, the one second auxiliary bead 72 is present between the two adjacent first auxiliary beads 71 in the direction Y

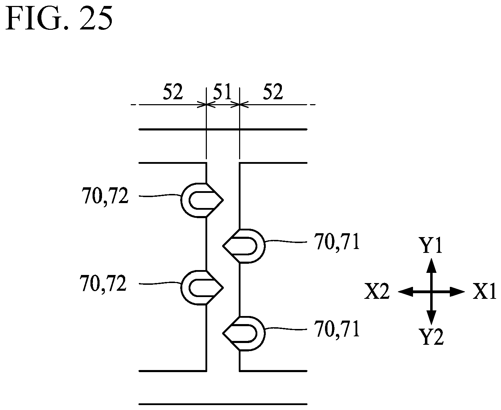

In the configuration shown in Fig. 25, two first auxiliary beads 71 and two second auxiliary beads 72 are arranged alternately in the direction Y The number of first auxiliary beads 71 and the number of second auxiliary beads 72 are not limited to the examples shown in Fig. 21 through Fig. 25.

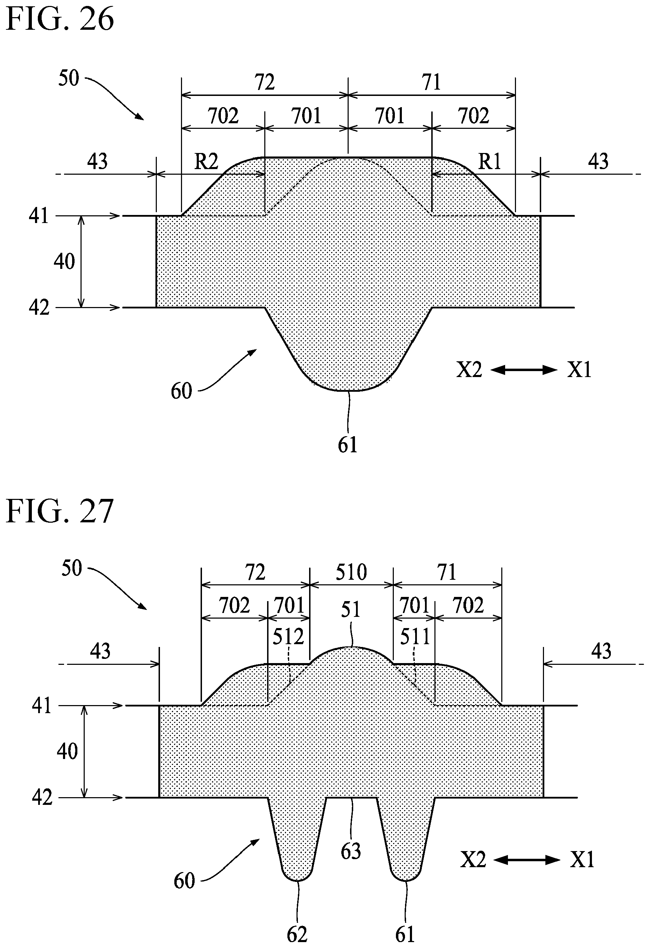

(6) In each of the foregoing embodiments, the rear bead 60 includes the plurality of protrusions 61 and the plurality of protrusions 62. However, the shape of the rear bead 60 may be freely selected, and is not limited to the example described above. For example, as shown in Fig. 26, the rear bead 60 may be comprised of one protrusion 61. In the configuration shown in Fig. 26, in plan view the ridge line of the arcuate surface 510 of the first portion 51 is superposed on a ridge line of the protrusion 61.

In the configuration shown in Fig. 26, compared to the first embodiment in which a narrow region 63 is present between a protrusion 61 and a protrusion 62, deformation of the first portion 51 due to pressure from the rotor 10 is substantially prevented. As a result, even in the configuration (first embodiment) in which the positions of the first auxiliary beads 71 in the direction Y are the same as the positions of the second auxiliary beads 72 in the direction Y, an advantage is obtained in that a deterioration in sealing performance described with reference to Fig. 14 is unlikely to occur.

(7) The shape of each of the auxiliary beads 70 may be freely selected, and is not limited to the example in each of the foregoing embodiments. In each of the foregoing embodiments, the top surface 701 of an auxiliary bead 70 extends from the top of the arcuate surface 510 of a first portion 51 in the direction X. However, as shown in Fig. 27, the top surface 701 of the auxiliary bead 70 may extend from the slope 511 of the first portion 51 or from the slope 512 of the first portion 51 in the direction X, for example.

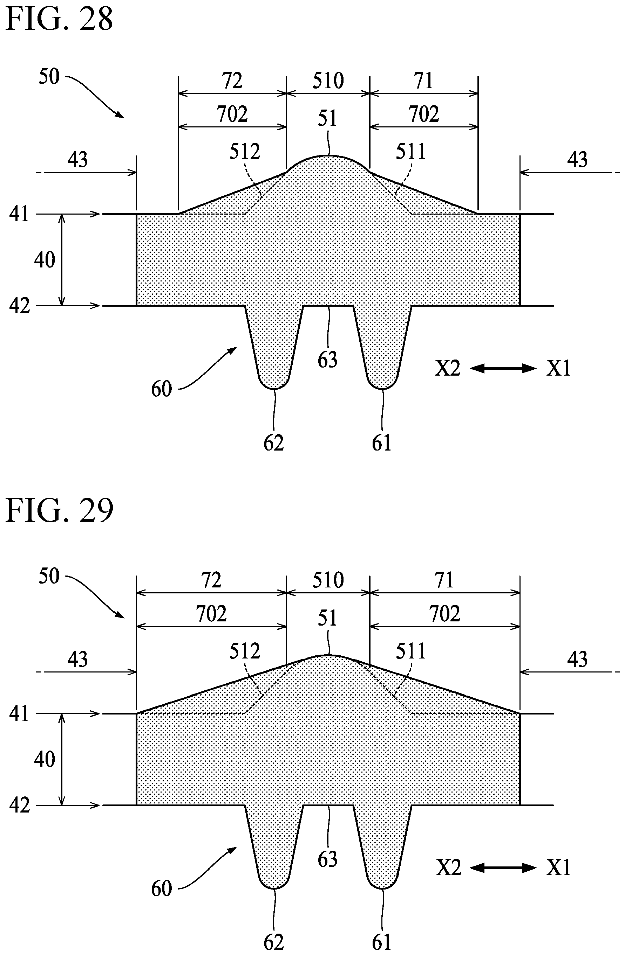

In each of the foregoing embodiments, the surface of each of the auxiliary beads 70 includes the top surface 701 and the slope 702. However, as shown in Fig. 28, the top surface 701 parallel to the first surface 41 may be omitted. In other words, the auxiliary bead 70 may include only the slope 702.

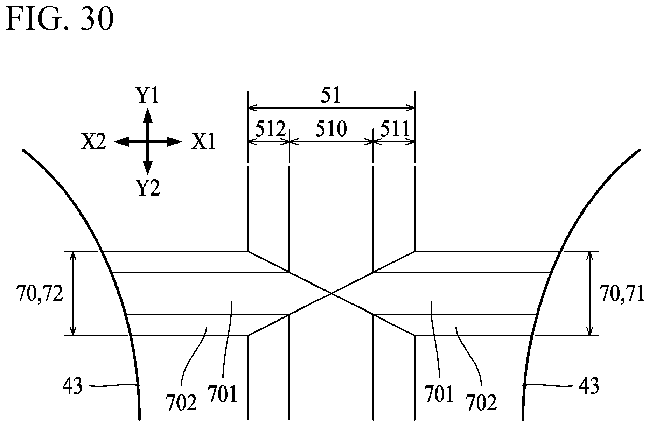

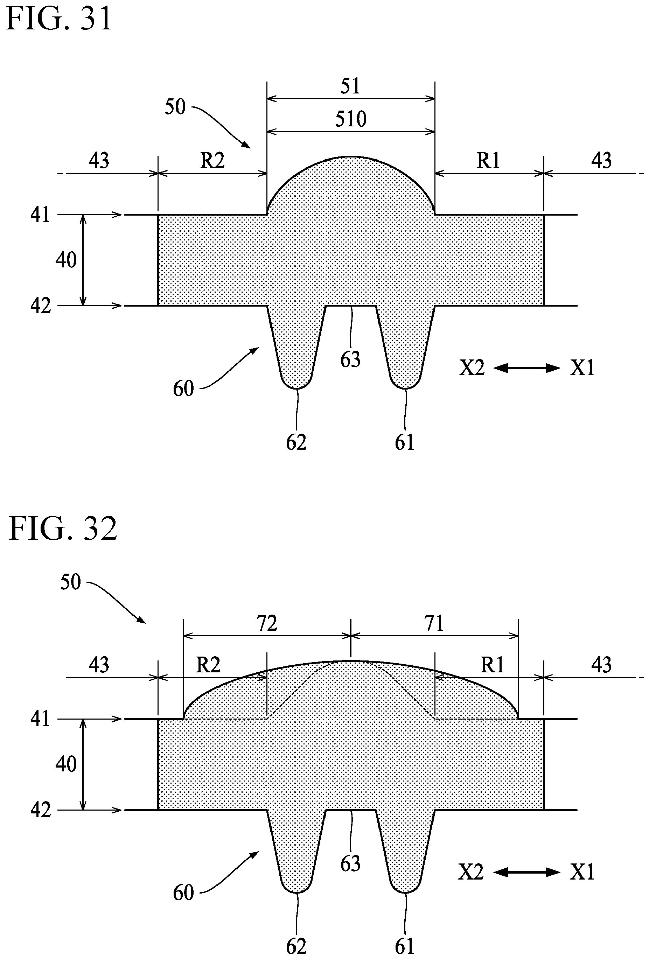

As shown in Fig. 29, each of the auxiliary beads 70 may extend to the peripheral edge of an opening 43. In other words, a first surface 41 may not be included in the cross section shown in Fig. 29. As shown in Fig. 30, each of the auxiliary beads 70 may extend to the peripheral edge of an opening 43 in the direction X. In Fig. 30, a distance between the auxiliary bead 70 and the opening 43 is zero.
(8) In each of the foregoing embodiments, the shape of each of the first auxiliary beads 71 is the same as that of each of the second auxiliary beads 72. However, the shape of each of the first auxiliary beads 71 may be different from the shape of each of the second auxiliary beads 72. The size of each of the first auxiliary beads 71 may be different from the size of each of the second auxiliary beads 72.
(9) In each of the foregoing embodiments, the rectangular sealing device 30 that is wound in a looped shape is used. However, the sealing device 30 may be formed in a looped shape. Specifically, the sealing device 30 may be formed in a looped shape of which an outer shape is cylindrical or circular truncated cone shaped.
(10) In each of the foregoing embodiments, the surface of each of the first portions 51 includes the arcuate surface 510, the slope 511, and the slope 512. However, as shown in Fig. 31, the surface of each of the first portions 51 may include only the arcuate surface 510 (i.e. curved surface). In other words, the slope 511 and the slope 512 that each include a plane may be omitted.
(11) In each of the foregoing embodiments, the surface of each of the auxiliary beads 70 includes a curved surface and a plane. However, as shown in Fig. 32, the surface of each of the auxiliary beads 70 may include only a curved surface such as an arcuate surface. In other words, the slope 702 including a plane may be omitted.
(12) In each of the foregoing embodiments, the sealing device 30 is constituted of a single elastic body. However, the sealing device 30 may be constituted of a plurality of portions. For example, the sealing device 30 may be constituted of a plurality of portions coupled to each other in the circumferential direction of the central axis C, or may be constituted by a plurality of portions coupled to each other in a direction along the central axis C.
(13) In this disclose, reference to an element using the designations "first," "second," etc., is used only for convenience in distinguishing elements, and has no substantial meaning. Thus, a position of each of the elements, an order of manufacture of the elements, etc. are not limited by a reference to an element using the designations "first," "second," etc.

### D: Supplemental Notes

The following configurations are derivable from the foregoing embodiments.

A sealing device according to one aspect (first aspect) of this disclosure is a sealing device provided between an outer circumferential surface of a rotatable rotor and an inner circumferential surface of a housing for accommodating the rotor, the sealing device including a reduction unit on a first surface facing the outer circumferential surface of the rotor, the reduction unit being configured to reduce a torque peak for rotation of the rotor. According to this aspect, provision of the reduction unit on the first surface of the sealing device makes it possible to reduce a torque peak required for rotation of a rotor compared to a configuration in which the reduction unit is not provided.

A sealing device according to another aspect (second aspect) of this disclosure is a sealing device provided between an outer circumferential surface of a rotatable rotor and an inner circumferential surface of a housing for accommodating the rotor, the outer circumferential surface of the rotor having a first opening, the inner circumferential surface of the housing having a second opening communicable with the first opening, the sealing device including: a body including a first surface facing the outer circumferential surface of the rotor, a second surface facing the inner circumferential surface of the housing, and a third opening corresponding to the second opening; a sealing bead on the first surface, the sealing bead surrounding the third opening; and at least one auxiliary bead on the first surface, the at least one auxiliary bead protruding from the sealing bead in a circumferential direction of the rotor. According to this aspect, during rotation of the rotor, the peripheral edge of the first opening of the rotor comes into contact with an auxiliary bead, and then passes over the sealing bead. Thus, it is possible to reduce a torque peak required for rotation of a rotor compared to a configuration in which the at least one auxiliary bead is not provided.

In a specific example (third aspect) of the second aspect, the sealing bead includes a first portion along an axial direction of the rotor, and the at least one auxiliary bead protrudes from the first portion in the circumferential direction of the rotor. According to this aspect, the peripheral edge of the first opening of the rotor comes into contact with an auxiliary bead, and then passes over the sealing bead. Thus, it is possible to reduce a torque peak required for rotation of a rotor compared to a configuration not having the at least one auxiliary bead.

In a specific example (fourth aspect) of third aspect, the at least one auxiliary bead includes: at least one first auxiliary bead protruding from the first portion in a first direction; and at least one second auxiliary bead protruding from the first portion in a second direction opposite to the first direction. According to this aspect, the at least one first auxiliary bead protrudes from the first portion of the sealing bead in the first direction, and the at least one second auxiliary bead protrudes from the first portion in the second direction. During movement of the rotor relative to the first portion in the second direction, first the peripheral edge of the first opening of the rotor comes into contact with the at least one first auxiliary bead, and moves on the at least one first auxiliary bead, and then passes over the sealing bead. On the other hand, during movement of the rotor relative to the first portion in the first direction, first the peripheral edge of the first opening of the rotor comes into contact with the at least one second auxiliary bead, and then passes over the sealing bead. Thus, regardless of a direction in which a rotor rotates, it is possible to reduce a torque peak required for rotation of the rotor.

In a specific example (fifth aspect) of the fourth aspect, a position of the at least one first auxiliary bead in the axial direction is different from a position of the at least one second auxiliary bead in the axial direction. In a configuration in which the position of the at least one first auxiliary bead in the axial direction is the same as the position of the at least one second auxiliary bead in the axial direction, when the rotor is in contact with both a first auxiliary bead and a second auxiliary bead, part of the first portion between the first auxiliary bead and the second auxiliary bead moves downward. As a result, a sealing performance of the sealing device may deteriorate. According to a configuration in which the position of the at least one first auxiliary bead in the axial direction is different from the position of the at least one second auxiliary bead in the axial direction, it is possible to reduce a downward movement of the part of the first portion between the first auxiliary bead and the second auxiliary bead. As a result, it is possible to substantially prevent a deterioration in sealing performance of the sealing device.

In a specific example (sixth aspect) of the fifth aspect, the at least one first auxiliary bead includes a plurality of first auxiliary beads, the at least one second auxiliary bead includes a plurality of second auxiliary beads, and the plurality of second auxiliary beads are present between the plurality of first auxiliary beads. According to this aspect, it is possible to substantially prevent a deterioration in sealing performance of the sealing device.

A sealing structure according to one aspect of this disclosure includes: a rotatable rotor; a housing for accommodating the rotor; and a sealing device provided between an outer circumferential surface of the rotor and an inner circumferential surface of the housing, in which the sealing device includes a reduction unit on a first surface facing the outer circumferential surface of the rotor, the reduction unit being configured to reduce a torque peak for rotation of the rotor.

A sealing structure according to another aspect of this disclosure includes: a rotatable rotor having an outer circumferential surface with a first opening; a housing for accommodating the rotor, the housing having an inner circumferential surface with a second opening communicable with the first opening; and a sealing device provided between an outer circumferential surface of the rotor and an inner circumferential surface of the housing, in which the sealing device includes: a body having a first surface facing the outer circumferential surface of the rotor, a second surface facing the inner circumferential surface of the housing, and a third opening corresponding to the second opening; a sealing bead on the first surface, the sealing bead surrounding the third opening; and at least one auxiliary bead on the first surface, the at least one auxiliary bead protruding from the sealing bead in a circumferential direction of the rotor.

### Description of Reference Signs

100... valve device, 10... rotor, 11... outer circumferential surface, 12... opening, 13... flow path, 20... housing, 21... inner circumferential surface, 22... opening, 30... sealing device, 31... inner circumferential surface, 32... outer circumferential surface, 40... body, 41... first surface, 42... second surface, 43... opening, 50... sealing bead, 51... first portion, 510... arcuate surface, 511... slope, 512... slope, 52... second portion, 60... rear bead, 61... protrusion, 62... protrusion, 70... auxiliary bead, 701... top surface, 702... slope, 71... first auxiliary bead, 72... second auxiliary bead, 80... low friction layer.

## Claims

1. A sealing device provided between an outer circumferential surface of a rotatable rotor and an inner circumferential surface of a housing for accommodating the rotor, the sealing device comprising: a reduction unit on a first surface facing the outer circumferential surface of the rotor, the reduction unit being configured to reduce a torque peak for rotation of the rotor.

2. A sealing device provided between an outer circumferential surface of a rotatable rotor and an inner circumferential surface of a housing for accommodating the rotor, the outer circumferential surface of the rotor having a first opening, the inner circumferential surface of the housing having a second opening communicable with the first opening, the sealing device comprising:
a body including a first surface facing the outer circumferential surface of the rotor, a second surface facing the inner circumferential surface of the housing, and a third opening corresponding to the second opening;
a sealing bead on the first surface, the sealing bead surrounding the third opening; and
at least one auxiliary bead on the first surface, the at least one auxiliary bead protruding from the sealing bead in a circumferential direction of the rotor.

3. The sealing device according to claim 2,
wherein the sealing bead includes a first portion along an axial direction of the rotor, and
wherein the at least one auxiliary bead protrudes from the first portion in the circumferential direction of the rotor.

4. The sealing device according to claim 3,
wherein the at least one auxiliary bead includes:
at least one first auxiliary bead protruding from the first portion in a first direction; and
at least one second auxiliary bead protruding from the first portion in a second direction opposite to the first direction.

5. The sealing device according to claim 4, wherein a position of the at least one first auxiliary bead in the axial direction is different from a position of the at least one second auxiliary bead in the axial direction.

6. The sealing device according to claim 5,
wherein the at least one first auxiliary bead includes a plurality of first auxiliary beads,
wherein the at least one second auxiliary bead includes a plurality of second auxiliary beads, and
wherein the plurality of second auxiliary beads are between the plurality of first auxiliary beads.

7. A sealing structure comprising:
a rotatable rotor;
a housing for accommodating the rotor; and
a sealing device provided between an outer circumferential surface of the rotor and an inner circumferential surface of the housing,
wherein the sealing device includes a reduction unit on a first surface facing the outer circumferential surface of the rotor, the reduction unit being configured to reduce a torque peak of for rotation of the rotor.

8. A sealing structure comprising:
a rotatable rotor having an outer circumferential surface with a first opening;
a housing for accommodating the rotor, the housing having an inner circumferential surface with a second opening communicable with the first opening; and
a sealing device provided between an outer circumferential surface of the rotor and an inner circumferential surface of the housing,
wherein the sealing device includes:
a body including a first surface facing the outer circumferential surface of the rotor, a second surface facing the inner circumferential surface of the housing, and a third opening corresponding to the second opening;
a sealing bead on the first surface, the sealing bead surrounding the third opening; and
at least one auxiliary bead on the first surface, the at least one auxiliary bead protruding from the sealing bead in a circumferential direction of the rotor.
